# EUROPEAN PATENT SPECIFICATION

(11) **EP 3 117 528 B1**
(45) Date of publication and mention of the grant of the patent: **24.06.2020**
(21) Application number: 13817875.1
(22) Date of filing: 08.11.2013
(51) Int. Cl.: H04B 1/38, G09F 13/22, A44C 15/00

(54) **WEARABLE ELECTRONIC ACCESSORY WITH LED, BLUETOOTH AND RFID/NFC TECHNOLOGY TO RECEIVE INFORMATION FROM CONNECTED DEVICES, AND FOR PERSONAL IDENTIFICATION AND DATA STORAGE/EXCHANGE**
TRAGBARES ELEKTRONISCHES ZUBEHÖR MIT LED, BLUETOOTH UND RFID-/NFC-TECHNIK ZUM EMPFANGEN VON INFORMATIONEN AUS ANGESCHLOSSENEN VORRICHTUNGEN SOWIE ZUR PERSONENIDENTIFIZIERUNG UND DATENSPEICHERUNG/-AUSTAUSCH
ACCESSOIRE ÉLECTRONIQUE PORTABLE DOTÉ D'UNE DEL, DU BLUETOOTH ET D'UNE TECHNOLOGIE RFID/NFC POUR RECEVOIR DES INFORMATIONS PROVENANT DE DISPOSITIFS CONNECTÉS, ET DESTINÉ À L'IDENTIFICATION PERSONNELLE ET AU STOCKAGE/À L'ÉCHANGE DE DONNÉES

(43) Date of publication of application: 18.01.2017
(73) Proprietor: Tomassini, Andrea Mr., 06030 Valtopina (PG) (IT)
(72) Inventor: Tomassini, Andrea Mr., 06030 Valtopina (PG) (IT)
(74) Representative: Brunacci, Marco
(86) International application number: PCT/EP2013/002175
(87) International publication number: WO 2015/067289

(56) References cited:
- WO-A1-2013/021209
- WO-A2-2011/132009
- US-A1- 2010 085 279
- US-A1- 2012 069 511

## Description

The extensive proliferation of devices such as smartphones, tablets, netbooks etc. has made it possible for users to access Internet (or Intranet) services any time, using applications developed ad hoc for these devices. The increase in what are commonly know as APPs (software applications) makes it possible to capitalise on the power and internal architecture of these machines in the same way as a PC, but with an altogether different degree of accessibility. Despite the undisputed advantages, until now there has been a certain amount of difficulty in using these machines due to the following issues:
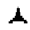 Smartphones and Tablets increasingly have dimensions which aren't negligible as they must enable users to interact easily through user interfaces (like touch screens on very large displays) with software which is increasingly more similar to PC software, in terms of detail and amount of information provided.
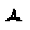 Given that these devices are equipped with especially high-performance software and APPs, a certain diligence is required by the user in managing the relevant graphical interfaces. This means that to know about even just one communication status via a WEB service (e.g. view a contact or friendship request on a social network) the user must interact via the social network's HOME PAGE.
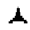 It can therefore easily be deduced that in using various applications on a smartphone or tablet this level of diligence is equivalent to that which is required when using the interface of a portable PC.
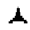 These devices are often used in unsuitable situations (e.g. when driving a vehicle or during other activities that demand special consideration), generating careless behaviour which is dangerous for the public.

What seems to be lacking is a device we can interact with using a different user interface (more straightforward) which can provide a summary (user determined) of required information, by collecting all necessary information and part of the available computational resources from the connection to smartphones, tablets, telephones, home automation stations etc. Moreover, it would be appropriate for the device to already be widespread among the public, and not seen as another device to add to the family of electronic gadgets already present in our everyday lives. Last but not least Is the fact that this device also performs an aesthetic function, which is enhanced by the technologies contained within it, to make it more quickly accepted for everyday use.

According to the Invention the idea is to redesign a bracelet in key technology, and provide it with electronic functionality that enables it to perform several functions which the user can choose (while voluntarily excluding others), creating an interface that can be 'customised' for any kind of use which is convenient for the user. There are similar devices on the market but they are often designed for one use and therefore do not provide a 'standard' intelligent interconnection packet to a variety of other devices. What this invention proposes is to create multi-functional electronic architecture that is significantly flexible and configurable to perform a wide range of functions in the same piece of hardware, and which is also enhanced by the 'familiarity' of its bracelet characteristics.

Three types of use can be identified:
1. Leisure and personal applications: according to the invention the bracelet functions in a strictly private setting for entertainment purposes and accessing information, without professional objectives. The bracelet also performs a significant aesthetic function.
1. Professional applications: the user needs to know data and information via a push service from the Internet, monitoring anything deemed sensitive and important for professional activities. The bracelet Is extensively configured for access to information available on the Internet.
2. CUSTOM company applications: the user is within a 'closed' organisation which, due to the use of specific, non-public software, uses the bracelet for sending communication and Information to company technology devices.

The device in this patent is presented as a wearable electronic accessory in the form of a bracelet equipped with hardware architecture (application processor) based on an ARM microprocessor, SoftPC reconfigurable or similar and flexible, reconfigurable, adaptive firmware architecture comprising an internal lithium-ion rechargeable battery, flexible OLED display or OLED touch screen display, micro USB connection port, and luminous LEDs connectable via radio transmission to electronic devices according to Bluetooth protocol or similar such as: smartphones, tablets, telephones, computers, control units, home automation devices etc. suited to the notification, reprocessing and communication of information via touch screen display, LED or flexible OLED display, LED arrays, loudspeaker, and Vibracall motor (information by vibration).

The device will make it possible to control, receive and reprocess communication from compatible devices using a radio Bluetooth connection, enabling the user to check any information, feedback and contact received at active accounts and connected to personal devices immediately.

The device will also identify the person for access to remote services according to the standards In use via an RFID/NFC chip, guaranteeing connection and therefore user security.

A special signal or function on the display will be associated with an event (e.g. social network communication), and/or other bracelet activities in accordance with the invention, to inform the wearer of the bracelet.

The device can also simply be worn as a night-time recognition/security device, or for illumination by activating the LED arrays.

Furthermore, as the device is designed to be worn as a bracelet, special consideration was given to the aesthetics, in order to make the invention suitable not only for use In its connection mode but also for decorative purposes.

In particular, the bracelet in accordance with the invention (named MASTER) is equipped with an internal battery recharging system, which capitalises on the principle of magnetic induction resulting from the use of the NFC antenna harmonised at a frequency of 13.56 MHz by means of a second wearable bracelet in accordance with the invention, named SLAVE. Bracelet according to the invention named SLAVE: wearable bracelet equipped with internal U-processor logic or similar, with battery charging logic and 13.56MHz oscillator circuit combined with a driver circuit and impedance adaptor circuit for RFID/NFC antenna control aimed at transmitting electrical power. The SLAVE type bracelet in accordance with the invention enables the recharging of the MASTER bracelet batteries by means of inductive coupling of the respective antennas.

To perform all the functions indicated, an application processor is used in the MASTER bracelet, which is equipped with an ARM type microprocessor or reconfigurable SoftPC or similar with UART, I2C, General I/O, USB and PCM interfaces, reconfigurable in real time due to the internal firmware. This firmware can:
1. Modify performance levels in real time depending on the workload.
1. Set up additional computational and/or peripheral resources, interact with requests from external peripherals connected.
2. Optimise workloads and reduce energy requests made to power management on the basis of these workloads.

This option makes the whole architecture very flexible and, depending on the applications being executed that users decide to use for their bracelet, optimises all the resources present. For example: if lots of communication peripherals are unused and high level computational resources are not required, the internal processor clock and all synchronous and asynchronous communication timings will adjust to reduced values to enable increased battery duration. If on the other hand many computational resources and frequent radio communications are required, the external LED array could be disabled (or partially disabled) to provide the processor with all the battery power required.

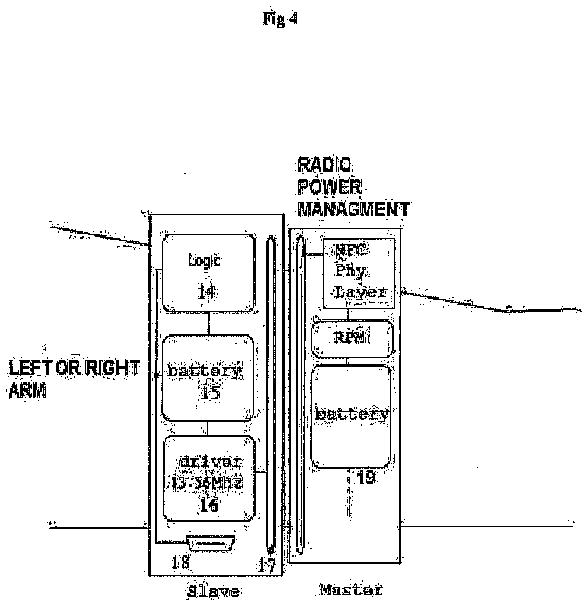

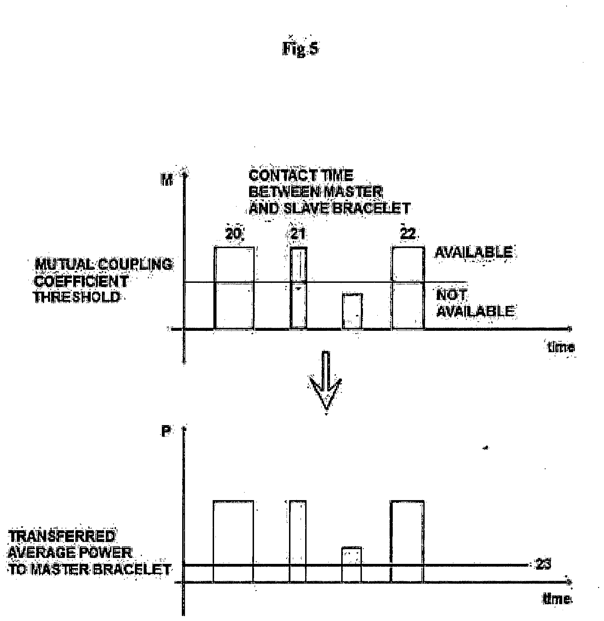

-As this is a device of particular dimensions and the bracelet has a predetermined form, a power management system has been designed to provide increased autonomy using a second optional similar bracelet (worn on the same arm), equipped with an identical NFC physical layer, but only used to transport electrical power via electromagnetic induction to the bracelet in this invention. An internal management system will recharge the internal battery or distribute the electrical power to the circuits (Fig. 4). Consequently, with no connection cable it is possible to recharge the internal battery of the bracelet in accordance with the invention (which we will call MASTER bracelet) just by having the second bracelet nearby (which we will call SLAVE bracelet). Therefore the SLAVE bracelet is equipped with internal logic (Fig. 4-14), an internal large capacity battery (Fig. 4-15), a driver circuit harmonised to 13.56 MHz (Fig. 4-16) with an internal impedance adaptor circuit, and an antenna (Fig. 4-17) and a USB and/or micro USB connector (Fig. 4-18) to recharge the battery. Obviously in practice the two bracelets may not combine perfectly with each other and therefore the mutual coupling coefficient M between the two may not be appropriate: this will cancel the power transfer to the bracelet in accordance with the invention. It is also true that when the arms are at rest in a downwards position the two bracelets are In contact, as it is also true that the bracelets may come into contact in other situations. When this transpires energy transfer from the SLAVE bracelet to the MASTER bracelet takes place (Fig 5 - 20, 21, 22). Therefore wireless 'average' power transfer over time is implemented (Fig. 5-23), which supplements the energy of the MASTER bracelet battery/s.

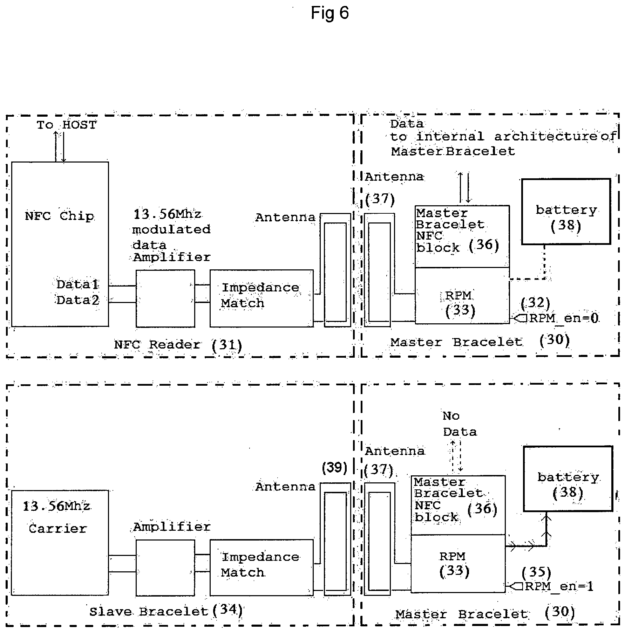

In Fig. 6 it is possible to see the physical layer of the NFC protocol in detail, appropriately modified for this purpose. When the MASTER bracelet (Fig. 6-30) is normally in the vicinity of an accredited NFC reader (Fig. 6-31), the NFC device on the MASTER bracelet (Fig. 6-36) activates communication and resolves the query request because the RPM_en control bit (Fig. 6-32) of the radio power management block (Fig. 6-33) is at 0 in accordance with the idea of the invention. In the vicinity of the SLAVE bracelet (Fig. 6-34), the RPM_en control bit is enabled at the value of 1 coming from the software application level on user request, and provides consent to inhibit the data transmission circuit (Fig. 6-36) and only extracts energy from the harmonised antenna (Fig. 6-37). The RPM block (Fig. 6-33) then deals with the correct management of the electrical power available by charging the internal battery (Fig. 6-38).

This idea in accordance with the invention makes It possible to increase and supplement the power of the MASTER bracelet's internal battery which could otherwise be inappropriate in some heavy use situations (e.g. frequent data communications via Bluetooth interface or intensive use of software for LED devices, analogue transducers etc.)

The invention of the RPM block Is based on the assertion that the inductance value necessary for the antenna and work frequency of the NFC (around 10 MHz) is found to be compatible with some energy transmission systems for inductive coupling in the test phase for various applications. If it is then possible to capitalise on the NFC's physical layer in this respect, it is possible (as explained) to reprocess the NFC protocol operation blocks to block the NFC IN/OUT data coming from the application processor in some situations (such as energy transfer), and control the system just for transferring electromagnetic energy (and hence electrical power). In the physicality and dimensions of the bracelet in accordance with the invention the NFC antenna then finds the correct position and easy implementation.

If we look at the state of the art of wereable device, at example the document WO2013/021209A1 or document US2012/006951A1 we find wireless system for a lot of type of communications. For example Claims of WO2013/021209A1 show "a wireless addressable wristband" with "RF receiver (34) arranged to receive a RF data burst.." and other type of functions strictly connected with the Data User or general data trasfering mode. This type of data are not generated for recharge battery. The idea of the invention is to generated a signal with another bracelet, into the RF channel of RFID/NFC communication and with the same RFID/NFC antennas, that is possible to convert in power energy to recharge the internal Battery, when needed. This new function is generated without altering native functions of RFID/NFC communication (the RPM command enable or disable the function). This wireless power function is given from the Slave bracelet.

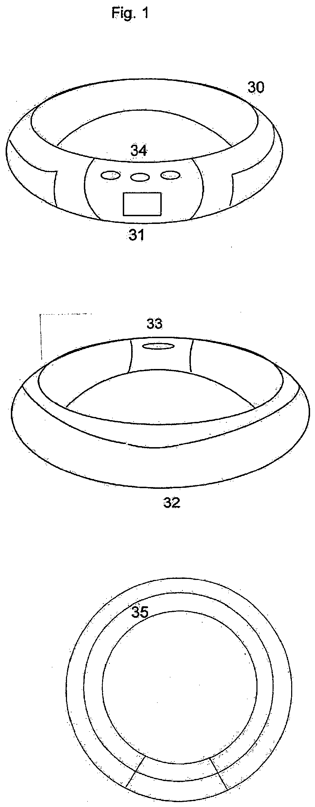

### CONSTRUCTION of MASTER bracelet (Fig 1) and its characteristics.

1) circular ergonomic form to be worn on the wrist (Fig. 1-30);
2) can be constructed in measurements to suit different users;
3) comprises a casing in non-toxic material (e.g. in natural or synthetic rubber or metal) with a transparent section aimed at making the underlying LEDs visible;
4) has a standard clasp with a connection system that terminates with a USB and/or micro USB connector (Fig. 1-33) aimed at data connection and internal battery charging;
5) there is an external strip of LEDs which varies depending on the dimensions, aimed at the visual transmission of information distributed by the internal software (Fig. 1-32);
6) the LED strip (Fig. 1-32) will be arranged along the entire length of the device and will have intermediate connections to make the bracelet flexible and easy to wear.
7) on the sides of the device there is another strip of LEDs for the visual transmission of technical information (connection status, memory used etc.) (Fig. 1-35);
8) the display is a capacitive touch screen and/or with LED or OLED flexible technology for interacting and scrolling the various menu items (Fig. 1-31);
9) there are one or more multi-function buttons;
10) the hardware is equipped with a function controller application processor chip, ARM type or similar, and flexible architecture that can configure and enable communication, data coding/decoding, and digital/analogue conversion functions, controlled by adaptive firmware in order to make the device in this invention adaptable to various areas of application required by the user or the application being executed. There is also a slot for a micro-SD card or other storage device, a chip set for radio communication according to BLUETOOTH, WLAN and RFID/NFC protocols, and housing for the antenna/s.
11) The following sensors and transducers are also present:
   - accelerometer and/or movement sensor (magnetometer);
   - vibrating motor (Vibracall) for signalling set by the firmware and software which integrates signalling from the display and the LEDS;
   - - loudspeaker and one or more microphones in order to implement an echo cancellation protocol for hands-free audio functions;
   - skimming digital fingerprint reader;
   - light sensor;
   - pressure sensor;
   - temperature sensor;
   - one or more mini rechargeable lithium-ion batteries.

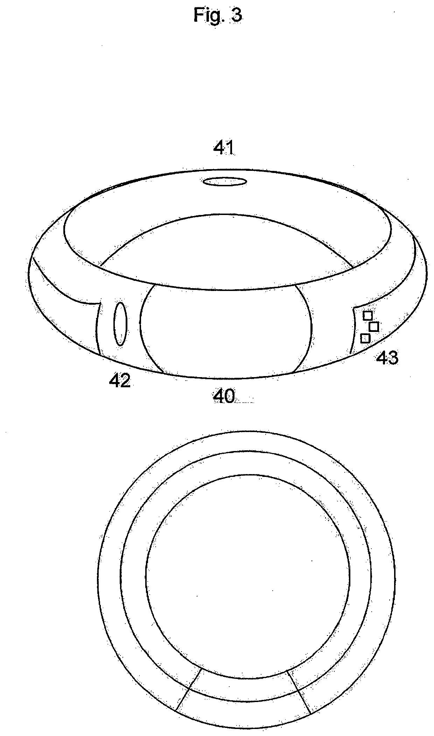

### CONSTRUCTION of SLAVE bracelet (Fig.3)

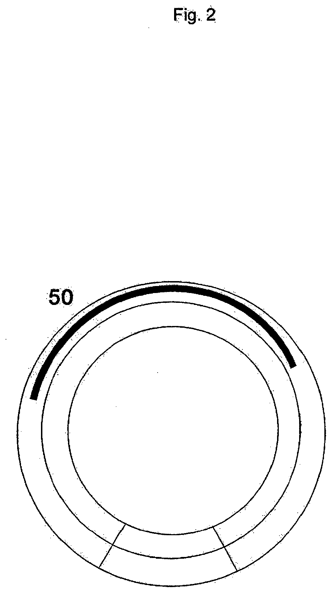

1) circular ergonomic form to be worn on the wrist (Fig. 3-40);
2) available in circumference measurements suitable for wear by men, women and children.-
3) comprises a casing In non-toxic material (e.g. in natural or synthetic rubber or metal) with a transparent section;
4) has a standard clasp with a connection system that terminates with a USB and/or micro USB connector (Fig. 3-41) for internal battery charging;
5) there are LEDs to indicate operation status (Fig. 3-43);
6) there are buttons to switch on and enable power transmission via inductive coupling to the MASTER bracelet as a result of an internal antenna (Fig. 2-50);
7) the hardware has internal U-processor type logic combined with a chip for recharging the lithium-ion batteries. The SLAVE bracelet has one or more rechargeable mini lithium-ion batteries. There is an oscillator circuit, a power driver circuit, an impedance adaptor circuit, and an antenna harmonised to the oscillator work frequency.

### STANDARD INTERNAL ARCHITECTURE:

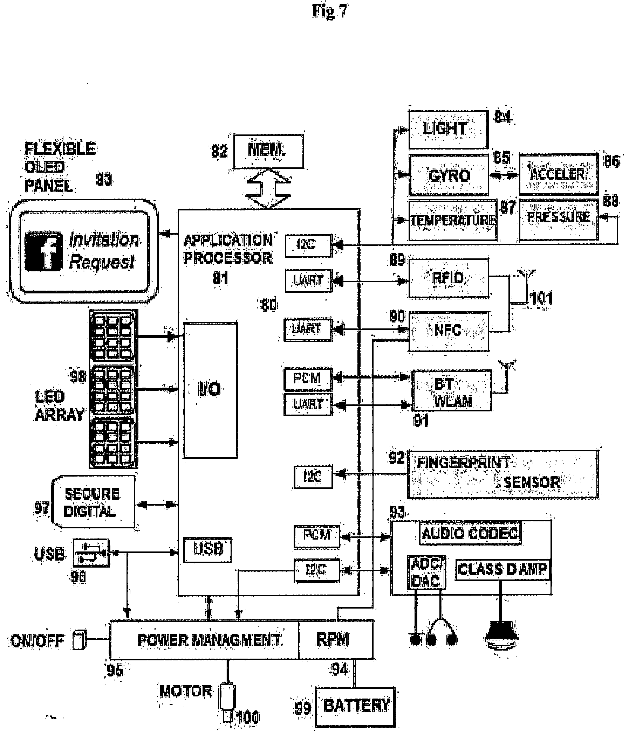

Fig. 7 illustrates the standard MASTER bracelet architecture according to the idea of the invention.

The application processor (Fig. 7-81) is equipped with an ARM (or SoftPC) type microprocessor, in which all peripherals and drivers required for communicating with the devices connected to them are instantiated in a flexible manner (and when necessary) due to the internal firmware. Consequently there are I/O, UART, PCM data flow, I2C (Fig. 7-80) ports and relevant synchronisations and USB ports. Equipped with an external memory (Fig. 7-82), it communicates with the sensor blocks: temperature sensor (Fig. 7-87), pressure sensor (Fig. 7-88), acceleration sensor in the three axes and gyro (Fig. 7-85, 86), light sensor (Fig. 7-84), digital fingerprint reader (Fig. 7-92). All status information coming from these devices is used for the high level applications and to determine operation status. The radio part incorporates the hardware, the driver and the relevant firmware for the Bluetooth and WLAN protocol (Fig. 7-91) with which the application processor can permanently connect (or when possible) to nearby devices such as smartphones, mobile telephones, tablets, control stations etc. The connection managed by special software in these devices will provide all the information required for the application processor to perform the required functions. The communications and services requested by the RFID/NFC applications (Fig. 7-89, 90) via its antenna (Fig. 7-101), are also managed by the RPM block according to the idea of the invention (Fig. 7-94), forming part of the bracelet's general power management (Fig. 7-95) for the battery charging function by inductive coupling with the SLAVE bracelet. The RPM block, in the presence of the SLAVE bracelet, actually inhibits data transmission and the upper application levels of the RFID/NFC protocols, and only uses the physical layer to draw power from the SLAVE device via the inductive coupling of the antennas. This function is managed via the graphical interface on the LED or flexible OLED touch screen (Fig. 7-83), or completely automatically, triggered by the Low Battery signal. If the user requires the use of the upper layers of the RFID/NFC protocols during internal battery charging by the SLAVE bracelet (e.g. for a POS purchase using NFC), the battery charging function can be disabled. The display (Fig. 7-83) provides a small summary (filtered by the user) of the large amount of information the user decides to control from the devices connected to the MASTER bracelet via Bluetooth interface, choosing the priority, form and correct sequence. This information is supplemented (or completed) by the information coming from the LED arrays (Fig. 7-98) and the vibracall motor (Information by Vibration) (Fig. 7-100). Information by Vibration is understood as the possibility of modulating the motor rotation frequency (Fig. 7-100) to vary the type of information. Therefore the device alone is capable of providing several types of information due to different rotation speeds (frequency modulated).

The LED arrays (Fig. 7-98) provide visual information on all the statuses that have to be communicated to the user, depending on the programming, need, and application that the user requires. In low battery situations they can be totally or partially disabled, and can also be used as light sources or as a visual safety signal only. In accordance with the invention their presence gives the MASTER bracelet precise visual characteristics and they represent a versatile communication system. Via the PCM data flow and the I2C interface the audio codec (Fig. 7-93) resolves any audio signal coding/decoding, provides the analogue/digital sampling, and the conversion from digital to analogue when necessary. The physical level of the block (Fig. 7-93) has one or more microphones to determine the echo cancellation factor required for the firmware for the hands-free service, when the MASTER bracelet is used as an audio interface device with a mobile telephone, smartphone or tablet. The block in question (Fig. 7-93) is therefore equipped with a class D amplifier to control the micro-loudspeaker. The USB and/or micro USB socket (Fig. 7-96) establishes the CABLED connection from the MASTER bracelet to all the devices the bracelet can interact with, in addition to providing the physical connection for internal battery recharging. The microSD memory card or other storage device stores the user information and data necessary for the various applications the MASTER bracelet is used for, including for example sensitive data coming from or necessary for the RFID/NFC blocks (Fig. 7-89, 90), the codec block audio data (Fig. 7-93), or anything resulting from high level applications on devices connected to the MASTER bracelet via Bluetooth or WLAN. The internal rechargeable lithium-ion battery (Fig. 7-99) is managed by the general power management block (Fig. 7-95) or the RPM block (Fig. 7-94).

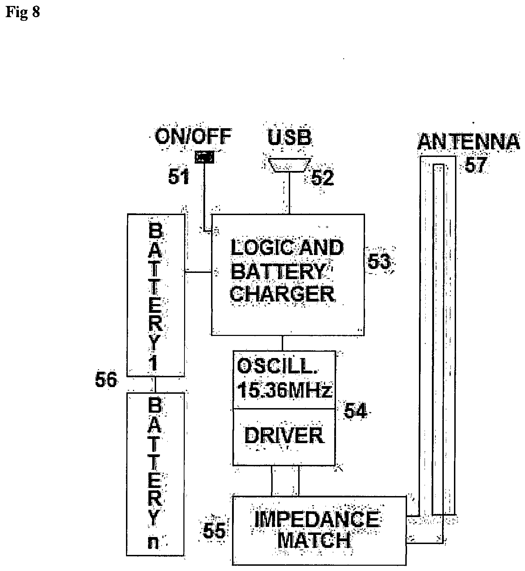

Fig. 8 illustrates the standard SLAVE bracelet architecture according to the idea of the invention: logic associated with a lithium-ion battery charging processor (Fig. 8-53) enables internal battery charging (one or more) (Fig. 8-56) when the micro USB connection (Fig. 8-52) of an external power supply Is present. On disconnection the same operation logic monitors the magnetic field of the antenna (Fig. 8-57) generated by the oscillator at 13.56 MHz (Fig. 8-54) and amplified by the appropriate driver, in line with energy saving logic. The impedance matching block (Fig. 8-55) adapts the electrical impedance of the antenna (Fig. 8-57) to the driver circuit (Fig. 8-54). Moving the antenna of the MASTER bracelet (Fig. 6-37) closer to the antenna of the SLAVE bracelet (Fig. 8-57) causes magnetic field disturbance due to the coupling of the two circuits, ensuring that the operation logic (Fig. 8-53) recognises the presence and coupling of the MASTER bracelet. This ensures that the internal logic (Fig. 8-53) enables the supply of the correct power to the driver circuit (Fig. 8-54), in order to transfer the maximum energy to the MASTER bracelet's batteries.

If the automatic recharging procedure mentioned above which is autonomously controlled by the SLAVE bracelet logic is not required, using the ON/OFF switch (Fig. 8-51) it is possible via user control to enable the battery charging function on the MASTER bracelet, excluding the action of the internal logic.

### AIMS and APPLICATIONS:

The aim of the invention (MASTER and SLAVE bracelet) is to act as a minimal addition or accessory for highly complex devices, removing the need to continually check these devices, given that the invention communicates main events, decided by the user, via a message or beep, or a sequence of vibrations (Information by Vibration), or the transmission of information via light.

On the basis of the characteristics and technologies applied, the invention provides users with a set of functions:
1) according to the idea of the invention this is an accessory that makes it possible to connect several pieces of equipment and filter the information transmitted by a wide range of devices, then reprocess that information in order to communicate it to the user depending on the area of application chosen (Leisure, Professional, CUSTOM). As this accessory is easily wearable as a bracelet it is more convenient than bulkier tablets, smartphones and PCs etc.
2) unique user representation by using the RFID/NFC number and a personal encrypted code stored in the chip or SD memory, or other storage device;
3) the possibility of saving and archiving information via the SD memory or other storage device incorporated for transporting and storing data;
4) a minimal tablet or smartphone addition which, connected via Bluetooth, flags events of the connected peripheral (call ID, texts, appointments, alarm clock, social networks etc.) using light effects and possible vibration, and with messages sent to the device itself;
5) a personal marketing tool that can transmit predefined information from the user such as e-mail, addresses, telephone numbers etc. via Bluetooth or RFID/NFC by simply moving devices closer;
6) an LED torch useful for illuminating or signalling presence in poor lighting conditions or in potentially dangerous situations;
7) a digital fingerprint reader useful for confirming identity or an electronic digital signature for documents;
8) Bluetooth hands-free facility via a microphone with small loudspeaker;
9) an object designed to recognise and authorise purchasing services via RFID/NFC.

On the basis of the characteristics and functionality described the invention which is the subject of this patent can find application and be used in a variety of circumstances.

The device represents a visual sensor connection to the hardware device via Bluetooth and WLAN, which is worn on the wrist. Therefore in the presence of telephones, smartphones or tablets, it provides immediate information on events such as calls, texts, social network communications (Facebook, Twitter etc,), and communication from any APP installed on the device, on the basis of the settings, privacy included, which the user has chosen.

Notification may occur visually by scrolling the LEDs on the entire surface of the bracelet that are designed to define writing or symbols, or may occur via vibration by means of vibracall and/or flashing LEDs; a variation of the visual LED notification system is the use of colours associated with specific communications e.g. a red LED would represent a missed call, a blue light a social event, and a white LED messages or calendar events.

This variation to the MASTER bracelet will be configurable via a special APP (software at an application level) installed on the remote device which controls functions such as brightness, written information, and intermittence, with light sequences or special messages and functions.

The RFID/NFC chip will equip the device for identification functions and therefore the invention could be used for example to open electronic locks, access private areas, and register at events, conferences and concerts.

On the basis of the settings predefined by the identifying subject, the device could replace paper tickets for entering exhibitions, concerts etc. paid previously while the APP checks authorisation on a WEB service for distributing tickets or authorising services or goods.

Another function of the RFID/NFC technology is the use of the invention for entering events by scanning the bracelet with a special reader which automatically transfers information such as the booking, ticket payment, and payment for additional services. All of this information can be shared using APPs.

IN HOME AUTOMATION APPLICATIONS: the device can send notification when connected to alarm or video surveillance systems, timers, alarm bells etc. to communicate faulty operation statuses or alerts.

In telemedicine and health care applications: the device can be used for the elderly to check movements or vital functions and share information via the web. To do this the residence or domicile of the elderly person involved will be arranged at various points with RFID/NFC readers which will authenticate identity and query the MASTER bracelet on the vital parameters gathered by the bracelet itself.

IN SPORTING APPLICATIONS: the device can count steps, monitor heartbeat, calculate calories burned, calculate biorhythms etc. during sport and exercise activities such as tennis, golf, skiing, gym routines etc. and can also be radio connected to gym equipment set up for this purpose and enabled for radio communications.

IN INDUSTRIAL APPLICATIONS: with the MASTER bracelet a group of technicians can access determined company perimeters and check key information on the status of technical equipment and workstations (e.g. the status of equipment in refineries, oil pipelines, large production lines, industrial robots). Each technician will have a CUSTOM bracelet set up for the relevant information. During movement within the work perimeter the equipment set up for connection will be able to connect to the MASTER bracelet and interact with it.

IN LEISURE APPLICATIONS: the bracelet can be used as identification for authorisation to events, concerts, clubs etc. This will occur via the verification of a code + an encryption algorithm + the RFID/NFC chip ID which will be read and verified by an RFID/NFC reader. The APP will outline the result and the arrangements.

As the MASTER bracelet is personal it can contain all the user's ID data and, by approaching or skimming another MASTER bracelet, can transfer e-mail addresses, telephone numbers, social network information and any other information defined by the control APP. This function will be controlled by an initial option configuration or by the bracelet itself.

The device can be used as a Bluetooth headset, the transmission protocol provides for this use via one or more microphones and a loudspeaker. The audio codec peripheral functions enable the integration of an algorithm for effective echo cancellation.

Finally, the MASTER bracelet is a watch synchronised to the connected device (smartphone, tablet or PC).

### BRACELET FUNCTIONALITY SOFTWARE INTEGRATION

The use of certain APPs developed for the most widespread systems such as LINUX, WINDOWS, PC, MAC, Android, IOS will control all bracelet functions:
- Options, brightness, light effects, notification, LEDs intermittence, sound;
- Software functionality;
- The device connected to the MASTER bracelet can download additional services to transfer to the MASTER bracelet via WEB connection, to update its capability and functionality.

An example of this functionality: a website (intended here as a WEB space connected to the bracelet via an APP) can log user and bracelet activities, statistics, list of credits, services enabled etc., providing and purchasing services, which will then activate a series of signalling procedures on the bracelet itself.

The website may be connected to various on-line services and activities, and will be set up for purchases to be made via credit card, Postepay, Paypal etc.

## Claims

1. Wearable electronic system consisting of a MASTER bracelet (Fig. 1) and a SLAVE bracelet (Fig. 3), said bracelets having circular shape and made with non-toxic material, wherein the MASTER bracelet has at least one transparent or light permeable section to make the underlying LEDs visible (Fig.1 - 32), provided with a push-button clasp fastener that finishes with a USB and/or microUSB connector (Fig.1 - 33); wherein the MASTER bracelet comprises a LED array arranged along the bracelet with intermediate connections to the array itself, provided with a capacitive touch screen display with LED and/or with flexible OLED technology to interact and scroll the menu items (Fig.1 - 31), and one or more multi-purpose push buttons (Fig.1 - 34); wherein the MASTER bracelet architecture is based on an Advanced RISC Machine microprocessor or SoftwarePC reconfigurable processor (Fig. 7 - 81) and firmware architecture, flexible and reconfigurable in real time, and equipped with internal hardware layout (Fig. 6 - 33, 36, 37) based on the RFID/NFC physical layer; wherein the SLAVE bracelet is provided with a USB and/or microUSB connector suited to charging internal batteries (Fig. 3 - 41), LED (Fig. 3 - 43) and buttons (Fig. 3 - 42) to enable transmission of power via inductive coupling to the MASTER bracelet (Fig. 1); wherein the SLAVE bracelet is equipped with hardware architecture (Fig. 8) based on microprocessor logic (Fig. 8 - 53), one or more internal lithium-ion rechargeable batteries (Fig. 8 - 56), battery charging circuit (Fig. 8 - 53), USB port (Fig. 8 - 52) and a physical layer designed for inductive coupling to the MASTER bracelet (Fig. 1); wherein the inductive coupling is allowed by an antenna (Fig. 8 - 57), an impedance matching circuit (Fig. 8 - 55), a power driver with an oscillator (Fig. 8 - 54) calibrated to the RFID/NFC frequency; the wearable electronic system being configured so that:
• when the MASTER (Fig1) and the SLAVE bracelets (Fig 3) are in contact each other, a RPM command (Fig7 - 94) from the MASTER inhibits RFID/NFC data transmission (Fig. 6 - 32) and enables only energy transfer (Fig. 6 - 35) via inductive coupling from the SLAVE bracelet (Fig. 6 - 34) (Fig.4 - 14, 15, 16, 17, 18), in order to charge its battery/internal batteries (Fig 6 - 38) (Fig. 4 - 19) by the same RFID/NFC physical layer of MASTER Bracelet (Fig 6 - 30); and the SLAVE bracelet (Fig8) sends on the RFID/NFC antenna a periodic signal generated from internal oscillator (Fig8 - 54);
• when the MASTER and SLAVE bracelets are not in contact with each other, the RPM command of the MASTER bracelet (Fig7 - 94) (Fig 6 - 32) restores the data transfer from RFID/NFC interface when in connection with a standard RFID/NFC device (Fig6 - 31) and inhibits energy transfer to the internal battery (Fig6 - 38).

2. The wearable electronic system of claim 1, wherein the MASTER bracelet further comprises one or more internal lithium-ion rechargeable batteries (Fig. 7 - 99), microSD memory card or other storage device (Fig. 7 - 97), and a series of light sensors (Fig. 7 - 84), position sensors (Fig. 7 - 85), acceleration sensors (Fig. 7 - 86), temperature sensors (Fig. 7 - 87), pressure sensors (Fig. 7 - 88) connectable via radio transmission to electronic devices according to Bluetooth and/or WLAN protocol (Fig. 7 - 91) such as: smartphones, tablets, telephones, computers, control units, home automation devices etc. suited to the notification, revision and communication of information via LED display (Fig. 7 - 83), LED arrays (Fig. 7 - 98), loudspeaker (Fig. 7 - 93), Vibracall motor (Fig. 7 - 100), and said Master bracelet being able to access data RFID/NFC services via internal electronics and antenna (Fig. 7 - 89 - 90 - 101).

3. The wearable electronic system of claims 1 or 2, wherein the MASTER bracelet is further equipped with internal software that the user can set to filter all information available from peripherals and software applications connected via Bluetooth and/or WLAN like social networks, instant messaging, domotics.

4. The wearable electronic system of claims 1 or 2, wherein the MASTER bracelet is further able to transmit data, and their elaboration, coming from light sensors (Fig. 7 - 84), position sensors (Fig. 7 - 85), acceleration sensors (Fig. 7 - 86), temperature sensors (Fig. 7 - 87), pressure sensors (Fig. 7 - 88) to an APP (software application) installed in a smartphone device, tablet, PC, mobile telephone, control units for industrial applications, home automation and interact with these devices via Bluetooth and/or WLAN communication protocol.

5. The wearable electronic system of claims 1 or 2, wherein the MASTER bracelet is further capable of managing an audio codec (Fig. 7 - 93) equipped with loudspeaker and one or more microphones suited to implementing an echo suppressor, to use the bracelet as a hands-free device for mobile telephones, smartphones, tablets connected via Bluetooth (Fig. 7-91).

6. The wearable electronic system of claims 1 or 2, wherein the RFID/NFC antenna (Fig. 6 - 37) is positioned on the outer perimeter of the MASTER bracelet.

7. The wearable electronic system of claims 1 or 2 wherein the MASTER bracelet (Fig. 1) is equipped with a notification system via vibracall, where a modulation of frequency of the vibracall (Fig. 7 - 100) notifies different levels of priority in the signal.

8. The wearable electronic system of claims 1 or 2, wherein the MASTER bracelet is further configured to to interact with internet website for bracelet software/firmware updates or the use of services related to the purposes of the bracelet itself.

9. The wearable electronic system of claims 1 or 2, wherein the MASTER bracelet is further configured to to provide a Bluetooth Advertising service (Push Advertising) and personal identification service for identity accreditation.

10. The wearable electronic device of claims 1 or 2, wherein the MASTER bracelet is further configured to to provide a health care service by continuous monitoring of human physical conditions using information data from light sensor (Fig.7 - 84) gyro sensor (Fig.7 - 85) pressure sensor (Fig.7- 88) temperature sensor (Fig.7 - 87) accelerometer (Fig.7 - 86) and data from audio codec (Fig.7 - 93).

11. The wearable electronic system of claims 1 or 2, wherein the MASTER bracelet (Fig. 1) is further configured to provide a monitoring service for sport and physical activity (heart rate, blood pressure, calculation of burned calories, biorhythm calculations) by the embodied sensors (Fig. 7 - 84, 85, 86, 87, 88, 92), also in connection with post-trauma rehabilitation machines that are able to access to MASTER bracelet (fig. 1) via Bluetooth, WLAN (Fig. 7 - 91), RFID/NFC (Fig. 7 - 89, 90, 101).

12. The wearable electronic system of claims 1 or 2, wherein the MASTER bracelet (Fig. 1) is further equipped with a firmware and an internal software that automatically, or by customized settings, filters all the information available for low energy consumption.

## Patentansprüche

1. Tragbares elektronisches System, bestehend aus einem MASTER-Armband (Fig. 1) und einem SLAVE-Armband (Fig. 3), wobei die Armbänder eine kreisrunde Form aufweisen und aus ungiftigem Material hergestellt sind, wobei das MASTER-Armband mindestens einen transparenten oder lichtdurchlässigen Abschnitt aufweist, um die darunter liegenden LEDs sichtbar zu machen (Fig. 1 - 32), und mit einem Druckknopfverschlusselement versehen ist, das in einem USB- und/oder Mikro-USB-Anschluss (Fig. 1 - 33) endet, wobei das MASTER-Armband eine längs des Armbands angeordnete LED-Anordnung mit Zwischenverbindungen zur Anordnung selbst umfasst und mit kapazitiver Berührungsbildschirmanzeige mit LED- und/oder flexibler OLED-Technologie zur Interaktion und zum Durchblättern der Menüelemente (Fig. 1 - 31) sowie einem oder mehreren Mehrzweckdruckknöpfen ausgestattet ist (Fig. 1 - 34); wobei die MASTER-Armband-Architektur auf einem Advanced RISC Machine Mikroprozessor oder SoftwarePCrekonfigurierbarem Prozessor (Fig. 7 - 81) und flexibler, in Echtzeit rekonfigurierbarer Firmware-Architektur basiert und mit internem Hardware-Layout (Fig. 6 - 33, 36, 37) ausgestattet ist, das auf einer physikalischen RFID/NFC-Schicht basiert; wobei das SLAVE-Armband mit einem USB- und/oder Mikro-USB-Anschluss zum Laden interner Batterien (Fig. 3 - 41), LED (Fig. 3 - 43) und mit Schaltflächen (Fig. 3 - 42) zur Aktivierung der Energieübertragung durch induktive Ankopplung an das MASTER-Armband (Fig. 1) ausgestattet ist; wobei das SLAVE-Armband mit einer Hardware-Architektur (Fig. 8) ausgestattet ist, die auf Mikroprozessorlogik (Fig. 8 - 53), einer oder mehreren, aufladbaren internen Lithiumionen-Batterien (Fig. 8 - 56), einem Batterieladekreis (Fig. 8 - 53), USB-Anschluss (Fig. 8 - 52) und einer physikalischen Schicht für die induktive Ankopplung an das MASTER-Armband (Fig. 1) basiert; wobei die induktive Ankopplung durch eine Antenne (Fig. 8 - 57), eine Impedanzanpassungsschaltung (Fig. 8 - 55) und einen Leistungstreiber mit einem Oszillator (Fig. 8 - 54), der auf die RFID/NFC-Frequenz eingestellt ist, ermöglicht wird; wobei das tragbare elektronische System so ausgebildet ist, dass:
• wenn das MASTER- (Fig. 1) und das SLAVE-Armband (Fig. 3) in Kontakt miteinander sind, ein RPM-Befehl (Fig. 7 - 94) des MASTER-Armbands die RFID/NFC-Datenübertragung (Fig. 6 - 32) verhindert und die Energieübertragung (Fig. 6- 35) durch induktive Ankopplung vom SLAVE-Armband (Fig. 6 - 34) (Fig.4 - 14, 16, 16, 17, 18) aktiviert, um dessen Batterie/interne Batterien (Fig. 6 - 38) (Fig. 4 - 19) durch die physikalische RFID/NFC-Schicht des MASTER-Armbands (Fig. 6 - 30) zu laden; das SLAVE-Armband (Fig. 8) sendet über die RFID/NFC-Antenne ein vom internen Oszillator erzeugtes, periodisches Signal (Fig. 8 - 54);
• wenn das MASTER- und das SLAVE-Armband nicht in Kontakt miteinander sind, der RPM-Befehl des MASTER-Armbands (Fig. 7 - 94) (Fig. 6 - 32) die Datenübertragung von der RFID/NFC-Schnittstelle wieder herstellt, wenn sie mit einem Standard-RFID/NFC-Gerät (Fig. 6 - 31) verbunden ist, und die Energieübertragung an die interne Batterie (Fig. 6 - 38) unterbindet.

2. Tragbares elektronisches System nach Anspruch 1, wobei das MASTER-Armband ferner eine oder mehrere, aufladbare interne Lithiumionen-Batterien (Fig. 7 - 99), eine Mikro-SD-Speicherkarte oder eine andere Speichervorrichtung (Fig. 7 - 97) und eine Reihe von Lichtsensoren (Fig. 7 - 84), Positionssensoren (Fig. 7 - 85), Beschleunigungssensoren (Fig. 7 - 86), Temperatursensoren (Fig. 7 - 87) und Drucksensoren (Fig. 7 - 88) umfasst, die mittels Funkübertragung gemäß Bluetooth- und/oder WLAN-Protokoll (Fig. 7 - 91) an elektronische Geräte, wie beispielsweise Smartphones, Tablet-Computer, Telefone, Computer, Steuereinheiten, Gebäudeautomationsvorrichtungen usw. anschließbar sind, die zur Mitteilung, Überarbeitung und Übermittlung von Informationen über LED-Anzeige (Fig. 7 - 83), LED-Anordnungen (Fig. 7 - 98), Lautsprecher (Fig. 7 - 93), Vibracall-Motor (Fig. 7 - 100) geeignet sind, wobei das MASTER-Armband in der Lage ist, über interne Elektronik und die Antenne auf RFID/NFC-Datendienste (Fig. 7 - 89 - 90 - 101) zuzugreifen.

3. Tragbares elektronisches System nach Anspruch 1 oder 2, wobei das MASTER-Armband ferner mit interner Software ausgestattet ist, die der Benutzer einstellen kann, um alle Informationen zu filtern, die von über Bluetooth und/oder WLAN angeschlossenen Peripheriegeräten und Software-Anwendungen wie beispielsweise soziale Netzwerke, Instant Messaging oder Gebäudeautomation verfügbar sind.

4. Tragbares elektronisches System nach Anspruch 1 oder 2, wobei das MASTER-Armband ferner in der Lage ist, Daten und deren Verarbeitung, die von Lichtsensoren (Fig. 7 - 84), Positionssensoren (Fig. 7 - 85), Beschleunigungssensoren (Fig. 7 - 86), Temperatursensoren (Fig. 7 - 87) und Drucksensoren (Fig. 7 - 88) eingehen, an eine in einem Smartphone, Tablet-Computer, PC, Mobiltelefon, Steuereinheit für industrielle Anwendungen und Gebäudeautomation installierte APP (Software-Anwendung) zu übertragen und mit diesen Geräten über Bluetooth und/oder WLAN-Kommunikationsprotokoll zu interagieren.

5. Tragbares elektronisches System nach Anspruch 1 oder 2, wobei das MASTER-Armband ferner in der Lage ist, ein Audio Codec (Fig. 7 - 93) zu verwalten, das mit einem Lautsprecher und einem oder mehreren Mikrophonen ausgestattet ist, die geeignet sind, eine Echosperre zu implementieren, um das Armband als Freisprecheinrichtung für über Bluetooth (Fig. 7 - 91) angeschlossene Mobiltelefone, Smartphones und Tablet-Computer zu benutzen.

6. Tragbares elektronisches System nach Anspruch 1 oder 2, wobei die RFID/NFC-Antenne (Fig. 6 - 37) auf dem äußeren Umfang des MASTER-Armbands angeordnet ist.

7. Tragbares elektronisches System nach Anspruch 1 oder 2 wobei das MASTER-Armband (Fig. 1) mit einem Mitteilungssystem über Vibracall ausgestattet ist, wobei eine Frequenzmodulation des Vibracalls (Fig. 7 - 100) auf unterschiedliche Prioritätsebenen des Signals hinweist.

8. Tragbares elektronisches System nach Anspruch 1 oder 2, wobei das MASTER-Armband ferner ausgebildet ist, um mit einer Internet-Website für Software/Firmware-Updates des Armbands oder für den Gebrauch der mit dem Armband verbundenen Dienstleistungen zu interagieren.

9. Tragbares elektronisches System nach Anspruch 1 oder 2, wobei das MASTER-Armband ferner ausgebildet ist, um einen Bluetooth-Werbedienst (Push Advertising) und Personenidentifikationsdienst zur Identitätsakkreditierung bereitzustellen.

10. Tragbare elektronische Vorrichtung nach Anspruch 1 oder 2, wobei das MASTER-Armband ferner ausgebildet ist, um Gesundheitsdienstleistungen durch ständige Überwachung der körperlichen Verfassung eines Menschen unter Verwendung von Daten des Lichtsensors (Fig. 7 - 84), Kreiselsensors (Fig. 7 - 85), Drucksensors (Fig. 7 - 88), Temperatursensors (Fig. 7 - 87), Beschleunigungssensors (Fig. 7 - 86) und der Daten des Audio Codec (Fig. 7 - 93) bereitzustellen.

11. Tragbare elektronische Vorrichtung nach Anspruch 1 oder 2, wobei das MASTER-Armband (Fig. 1) ferner ausgebildet ist um einen Überwachungsdienst für Sport und physische Aktivität (Herzfrequenz, Blutdruck, Berechnung der Kalorienverbrennung, Biorhythmusberechnung) durch eingebaute Sensoren (Fig. 7 - 84, 85, 86, 87, 88, 92), die auch mit posttraumatischen Rehabilitationsgeräten verbunden sind, über die auf das MASTER-Armband (Fig. 1) zugegriffen werden kann Bluetooth, WLAN (Fig. 7 - 91), RFID / NFC (Fig. 7 - 89, 90, 101).

12. Tragbares elektronisches System nach Anspruch 1 oder 2 wobei das MASTER-Armband (Fig. 1) mit Firmware und interner Software ausgestattet ist, wobei die Software automatisch oder durch eine benutzerdefinierte Einstellung alle verfügbaren Informationen nach filtert Geringer Energieverbrauch.

## Revendications

1. Système électronique portable concernant un bracelet MAîTRE (Fig.1) et un bracelet ESCLAVE (Fig.3), lesdits bracelets ont une forme circulaire et sont fabriqués avec un matériau non toxique, dans lequel le BRACELET MAÎTRE a, au moins, une section transparente ou perméable à la lumière pour rendre visibles les DELs sous-jacentes (Fig. 1 - 32), muni d'une fermeture à bouton-pression qui se termine avec un connecteur USB et/ou micro USB (Fig.1 - 33); dans lequel le bracelet MAÎTRE se compose d'une bande de DEL disposé le long de bracelet avec des connexions intermédiaires à la bande elle-même, muni d'un écran tactile avec la technologie LED et/ou la technologie flexible OLED pour interagir et défiler les éléments du menu (Fig. 1 - 31), et un ou plusieurs bouton - poussoirs multifonction (Fig.1 - 34); dans lequel l'architecture du bracelet MAÎTRE est fondée sur un microprocesseur Advanced RISC Machine ou un processeur reconfigurable SoftwarePC (Fig. 7 - 81) et une architecture de microprogramme, flexible et reconfigurable en temps réel, et munie d'une disposition du matériel interne (Fig. 6 - 33, 36, 37) fondé sur le couche physique RFID/NFC; dans lequel le bracelet ESCLAVE est muni d'un connecteur USB et/ou micro USB adapté au chargement de batteries internes (Fig. 3 - 41), DEL (Fig. 3 - 43) et bouton (Fig. 3 - 42) pour activer la transmission de puissance par couplage inductif au bracelet MAîTRE (Fig. 1); dans lequel le bracelet ESCLAVE est muni d'une architecture matérielle (Fig. 8) fondée sur un microprocesseur logique (Fig. 8 - 53), un ou plusieurs batteries internes rechargeables au lithium-ion (Fig. 8 - 56), un circuit de charge de batterie (Fig. 8 - 53), un port USB (Fig. 8 - 52) et une couche physique conçue pour le couplage inductif au bracelet MAÎTRE (Fig. 1); dans lequel le couplage inductif est autorisé par une antenne (Fig. 8 - 57), un circuit d'adaptation d'impédance (Fig. 8 - 55), un transistor de puissance avec un oscillateur (Fig. 8 - 54) calibré sur la fréquence RFID/NFC; le système électronique portable est configuré pour que:
• quand le bracelet MAîTRE (Fig. 1) et le bracelet ESCLAVE (Fig. 3) sont en contact l'un avec l'autre, un command RPM (Fig. 7 - 94) par le bracelet MAÎTRE inhibe la transmission des données RFID/NFC (Fig.6 - 32) et permet seulement le transfert d'énergie (Fig. 6 - 35) par le couplage inductif du bracelet ESCLAVE (Fig. 6 - 34) (Fig. 4 - 14, 15, 16, 17, 18) afin de charger ses batterie/ internes batteries (Fig. 6 - 38) (Fig. 4 - 19) par la même couche physique RFID/NFC du bracelet MAÎTRE (Fig. 6 - 30); et le bracelet ESCLAVE (Fig. 8) envoie sur l'antenne RFID/NFC un signal périodique généré par l'oscillateur interne (Fig. 8 - 54);
• quand les bracelets MAîTRE et ESCLAVE ne sont pas en contact, l'un avec l'autre, le command RPM du bracelet MAîTRE (Fig. 7 - 94) (Fig. 6 - 32) restaure le transfert de données de l'interface RFID/NFC quand il est en connexion avec un dispositif standard RFID/NFC (Fig. 6 - 31) et inhibe le transfert d'énergie à la batterie interne (Fig. 6 - 38).

2. Système électronique portable de la Revendication 1, dans lequel, en outre, le bracelet MAÎTRE comprend un ou plusieurs batteries internes rechargeables au lithium-ion (Fig. 7 - 99), une carte mémoire micro SD ou un autre dispositif de stockage (Fig. 7 - 97) et une série de capteurs de lumière (Fig. 7 - 84), capteurs de position (Fig. 7 - 85), capteurs d'accélération (Fig. 7 - 86), capteurs de température (Fig. 7 - 87), capteurs de pression (Fig. 7 - 88) connectables par transmission radio aux dispositifs électroniques conformément à un protocole Bluetooth et/ou WLAN (Fig. 7 - 91) tels que: smartphone, tablettes, téléphones, computers, unités de contrôle, dispositifs domotiques etc. adaptés à la notification, révision et communication de l'information par un écran au DEL (Fig. 7 - 83), des bandes de DEL (Fig. 7 - 98), un haut-parleur (Fig. 7 - 93), un moteur VibraCall (Fig. 7 - 100), et le nommé bracelet MAÎTRE qui est capable d'accéder aux services de données RFID/NFC par des composants électroniques internes et par l'antenne (Fig. 7 - 89 - 90 - 101).

3. Système électronique portable de la Revendication 1 ou 2, dans lequel le bracelet MAÎTRE est en outre muni de logiciel interne que l'utilisateur peut configurer pour filtrer toutes les informations disponibles à partir des périphériques et applications logicielles connectés par Bluetooth et/ou WLAN comme les réseaux sociales, messagerie instantanée, domotique.

4. Système électronique portable de la Revendication 1 ou 2, dans lequel le bracelet MAÎTRE est en outre capable de transmettre de données et leur élaboration, provenant de capteurs de lumière (Fig. 7 - 84), capteurs de position (Fig. 7 - 85), capteurs d'accélération (Fig. 7 - 86), capteurs de température (Fig. 7 - 87), capteurs de pression (Fig. 7 - 88) à un APP (application logicielle) installé dans un dispositif smartphone, une tablette, un PC, un téléphone mobile, des unités de contrôle pour des applications industrielles, domotique et interagit avec ces dispositifs par protocole de communication Bluetooth et/ou WLAN.

5. Système électronique portable de la Revendication 1 ou 2, dans lequel le bracelet MAÎTRE est en outre capable de gérer un codec audio (Fig. 7 - 93) muni d'un haut-parleur et un ou plusieurs microphones adaptés à la mise en œuvre d'un suppresseur d'écho, à utiliser le bracelet comme dispositif mains libres pour téléphones mobiles, smartphones, tablettes connectés par Bluetooth (Fig. 7 - 91).

6. Système électronique portable de la Revendication 1 ou 2, dans lequel l'antenne RFID/NRC (Fig. 6 - 37) est positionnée sur l'autre périmètre du bracelet MAÎTRE.

7. Système électronique portable de la Revendication 1 ou 2 dans lequel le bracelet MAÎTRE (Fig. 1) est muni d'un système de notification par vibracall où la modulation de la fréquence du vibracall (Fig. 7 - 100) notifie différents niveaux de priorité dans le signal.

8. Système électronique portable de la Revendication 1 ou 2, dans lequel le bracelet MAÎTRE est en outre configurée pour interagir avec le site Internet pour les mises à jour du bracelet logiciel/micrologiciel ou pour l'utilisation des services liés à l'objectif du bracelet lui- même.

9. Système électronique portable de la Revendication 1 ou 2 dans lequel le bracelet MAÎTRE est en outre configuré pour le service de la publicité Bluetooth (Publicité de Pression) et le service de l'identification personnel pour l'accréditation d'identité.

10. Système électronique portable de la Revendication 1 ou 2 dans lequel le bracelet MAîTRE est en outre configuré pour fournir un service de santé qui surveille en continu des conditions physiques humaines en utilisant les données des informations par les capteurs de lumière (Fig. 7 - 84), les capteurs gyroscopiques (Fig. 7 - 85), les capteurs de pression (Fig. 7 - 88), les capteurs de température (Fig. 7 - 87) les capteurs d'accélération (Fig. 7 - 86) et le données par le codée audio (Fig. 7 - 93).

11. Système électronique portable de la Revendication 1 ou 2 dans lequel le bracelet MAÎTRE (Fig. 1) est en outre configuré pour fournir un service de surveillance pour le sport et les activités physiques (rythme cardiaque, pression du sang, calcules de calories brûlées, calcules de biorythme) par des capteurs incorporés (Fig. 7 - 84, 85, 86, 87, 88, 92), aussi connectés avec des machines pour la réhabilitation post-trauma qui sont capables de accéder au bracelet MAÎTRE (Fig.1) par Bluetooth, WLAN (Fig. 7 - 91), RFID/NFC (Fig. 7 - 89, 90, 101).

12. Système électronique portable de la Revendication 1 ou 2 dans lequel le bracelet MAÎTRE (Fig. 1) est en outre muni d'un micrologiciel et d'un logiciel interne qui automatiquement, ou par un réglage personnalisé, filtre toutes les informations disponibles pour une faible consommation d'énergie.
